# EUROPÄISCHE PATENTSCHRIFT

(11) **EP 0 447 755 B1**
(45) Veröffentlichungstag und Bekanntmachung des Hinweises auf die Patenterteilung: **27.04.1994**
(21) Anmeldenummer: 91100790.4
(22) Anmeldetag: 23.01.1991
(51) Int. Cl.: B27K 3/50

(54) **Mittel oder Konzentrat zum Schutz von Schnittholz gegen Bläuebefall und Schimmelbefall**
Composition or concentrate for protecting sawn wood from blue stain and mildew attack
Agent ou concentré pour la protection du bois de sciage contre l'attaque par des cyanophycées ou des moisissures

(30) Priorität: 20.03.1990 DE 4008836
(43) Veröffentlichungstag der Anmeldung: 25.09.1991
(73) Patentinhaber: DESOWAG Materialschutz GmbH, D-40417 Düsseldorf (DE)
(72) Erfinder: Hellwig, Volker, Dr., W-4150 Krefeld 1 (DE); Hiller, Johannes Christian, Dr., W-4044 Kaarst (DE)
(74) Vertreter: Lauer, Dieter, Dr.

(56) Entgegenhaltungen:
- EP-A- 0 072 426
- EP-A- 0 120 219
- DE-A- 3 224 917

## Beschreibung

Die vorliegende Erfindung betrifft ein Mittel oder Konzentrat zum Schutz von Schnittholz gegen Bläuebefall und Schimmelbefall.

Frisch gesägtes Schnittholz wird in feuchtem Zustand häufig von holzverfärbenden Pilzen (Bläuepilzen) und Schimmelpilzen befallen, wodurch eine Wertminderung des Holzes hervorgerufen wird. Daher ist es notwendig, eine Schutzbehandlung des Holzes durchzuführen.

Es ist bereits bekannt, (Ullmanns Encyklopädie der technischen Chemie, Bd 23, S. 154 (1983), daß Methylenbisthiocyanat algizide, bakterizide und fungizide Eigenschaften aufweist. Praxiserfahrungen in den Tropen insbesondere zur Regenzeit haben jedoch gezeigt, daß keine ausreichende Verhinderung des Schimmelbefalls von Holz mit dieser Verbindung allein erzielt werden konnte.

Die Verbindung Tris-(N-cyclohexyl-diazeniumdioxi)-aluminium soll gemäß den Angaben in der Literaturstelle "Holz als Roh- und Werkstoff" 35 (1977, S. 234 zwar eine bläuewidrige Wirksamkeit aufweist, die indessen aufgrund eigener durchgeführter Versuche nicht völlig befriedigen konnte.

Es wurde nun überraschend gefunden, daß durch eine Kombination von Methylenbisthiocyanat und Tris-(N-cyclohexyl-diazeniumdioxi)-aluminium eine synergistische Erhöhung der Wirksamkeit gegen Bläuebefall und Schimmelbefall erzielt wird. Erfindungsgemäß wird daher ein Mittel oder Konzentrat zum Schutz Schnittholz gegen Bläuebefall und Schimmelbefall vorgeschlagen, das aus einer Mischung von
A) Methylenbisthiocyanat und
B) Tris-(N-cyclohexyl-diazeniumdioxi)-aluminium in einem Verhältnis von

8 : 1 bis 1 : 8, vorzugsweise
2 : 1 bis 1 : 2,
in einem unpolaren und/oder polaren organisch-chemischen Lösemittel oder Lösemittelgemisch, vorzugsweise in einem polaren organisch-chemischen Lösemittel oder Lösemittelgemisch oder in einem Gemisch aus unpolaren und polaren Lösemitteln oder in einem Gemisch aus Wasser und einem organisch-chemischen Lösemittel oder Lösemittelgemisch, vorzugsweise einem polaren organisch-chemischen Lösemittel oder Lösemittelgemisch und mindestens einem Emulgator und/oder Netzmittel gelöst, besteht. Besonders bevorzugt wird ein Verhältnis der beiden Wirkstoffe von 1 : 1.

Als unpolare organisch-chemische Lösesmittel oder Lösemittelgemische werden bevorzugt Aromatenfraktionen von Mineralölen eingesetzt.

Als polare organisch-chemische Lösemittel werden Hydroxy-, Ether-, Ester-, oder Ketogruppen enthaltene Lösemittel oder Lösemittelgemische eingesetzt. Bevorzugt gelangen Cyclohexanon, N-Methylpyrrolidon oder Dimethylformamid zum Einsatz.

Beim Einsatz von Gemischen aus unpolaren und polaren organisch-chemischen Lösemitteln ist der Anteil des polaren organisch-chemischen Lösemittels vorzugsweise größer als der Anteil des unpolaren organischchemischen Lösemittels.

Als Emulgator wird vorzugsweise ein nichtionogener Emulgator oder nichtionogenes Emulgatorgemisch, vorzugsweise ein eine Seitengruppe enthaltendes äthoxyliertes Phenol, besonders bevorzugt ein äthoxyliertes Nonylphenol verwendet. Das nichtionogene Emulgatorgemisch besteht vorzugweise aus einem Gemisch von nichtionogenen Emulgatoren unterschiedlicher Kettnlänge von denen ein Emulgator eine äthoxylierte Seitenkette von weniger als 10 Äthoxygruppen und von denen mindestens ein anderer Emulgator eine äthoxylierte Seitenkette von mehr als 10 Äthoxygruppen besitzt.

Das erfindungsgemäße Konzentrat zum Schutz von Schnittholz, gegen Bläuebefall und Schimmelbefall enthält vorteilhaft
2 bis 20 Gew. %, vorzugsweise
8 bis 12 Gew.
des Gemisches aus
A) Methylenbisthiocyanat und
B) Tris-(N-cyclohexyl-diazeniumdioxi)-aluminium

im Verhältnis von
8 : 1 bis 1 : 8, vorzugsweise
2 : 1 bis 1 : 2
sowie
mehr als 79 Gew. %, vorzugsweise
mehr als 87 Gew. %
des unpolaren und/oder polaren organisch-chemischen Lösemittel oder Lösemittelgemisches, vorzugsweise des polaren organischchemischen Lösemittels oder Lösemittelgemisches oder des Gemisches aus unpolaren und polaren Lösemitteln oder des Gemisches aus Wasser und einem organisch-chemischen Lösemittel oder Lösemittelgemisch, vorzugsweise einem polaren organisch-chemischen Lösemittel oder Lösemittelgemisch und mindestens einen Emulgator und/oder Netzmittel.

Das erfindungsgemäße Mittel (anwendungsfertige Mittel) zum Schutz von und Schnittholz gegen Bläuebefall und Schimmelbefall enthält nach einer vorteilhaften Ausführungsform
1 bis 20 Gew. % , vorzugsweise
2 bis 5 Gew. %
des Konzentrats, bestehend aus
2 bis 20 Gew. %, vorzugsweise
8 bis 12 Gew. %
der Mischung aus
A) Methylenbisthiocyanat und
B) Tris-(N-cyclohexyl-diazeniumdioxi)-aluminium

im Verhältnis von
8 : 1 bis 1 : 8, vorzugsweise
2 : 1 bis 1 : 2
sowie
mehr als 79 Gew. %, vorzugsweise
mehr als 87 Gew. %
des unpolaren und/oder polaren organisch-chemischen Lösemittel oder Lösemittelgemisches, vorzugsweise des polaren organischchemischen Lösemittels oder Lösemittelgemisches oder des Gemisches aus unpolaren und polaren Lösemitteln oder des Gemisches aus Wasser und einem organisch-chemischen Lösemittel oder Lösemittelgemisch, vorzugsweise einem polaren organisch-chemischen Lösemittel oder Lösemittelgemisch und mindestens einem Emulgator und/oder Netzmittel
und
mehr als 79 Gew. %, vorzugsweise
mehr als 94 Gew. %
Wasser.

Das Schnittholz wird mit dem erfindungsgemäßen Mittel oder Konzentrat derart behandelt, daß auf der Holzoberfläche
2 bis 6 g/m², vorzugsweise
3 bis 5 g/m²
des Mittels oder Konzentrats aufgebracht werden.

## Patentansprüche

1. Mittel oder Konzentrat zum Schutz von Schnittholz gegen Bläuebefall und Schimmelbefall, dadurch gekennzeichnet, daß es aus einer Mischung von
A) Methylenbisthiocyanat und
B) Tris-(N-cyclohexyl-diazeniumdioxi)-aluminium
in einem Verhältnis von
8 : 1 bis 1 : 8, vorzugsweise
2 : 1 bis 1 : 2,
in einem unpolaren und/oder polaren organisch-chemischen Lösemittel oder Lösemittelgemisch, vorzugsweise in einem polaren organisch-chemischen Lösemittel oder Lösemittelgemisch oder in einem Gemisch aus unpolaren und polaren Lösemitteln oder in einem Gemisch von Wasser und einem organisch-chemischen Lösemittel oder Lösemittelgemisch, vorzugsweise einem polaren organisch-chemischen Lösemittel oder Lösemittelgemisch und mindestens einem Emulgator und/oder Netzmittel gelöst besteht.

2. Konzentrat zum Schutz von Schnittholz gegen Bläuebefall und Schimmelbefall nach Anspruch 1, dadurch gekennzeichnet, daß es
2 bis 20 Gew. %, vorzugsweise
8 bis 12 Gew. %
des Gemisches aus
A) Methylenbisthiocyanat und
B) Tris-(N-cyclohexyl-diazeniumdioxi)-aluminium
in einem Verhältnis von
8 : 1 bis 1 : 8, vorzugsweise
2 : 1 bis 1 : 2
sowie
mehr als 79 Gew. %, vorzugsweise
mehr als 87 Gew. %
des unpolaren und/oder polaren organisch-chemischen Lösemittels oder Lösemittelgemisches, vorzugsweise des polaren organisch-chemischen Lösemittels oder Lösemittelgemisches oder des Gemisches aus unpolaren und polaren Lösemitteln oder des Gemisches aus Wasser und einem organisch-chemischen Lösemittel oder Lösemittelgemisch, vorzugsweise einem polaren organisch-chemischen Lösemittel oder Lösemittelgemisch und mindestens einem Emulgator und/oder Netzmittel enthält.

3. Mittel zum Schutz von Schnittholz gegen Bläuebefall und Schimmelbefall nach Anspruch 1 oder 2, dadurch gekennzeichnet, daß das Mittel (anwendungsfertige Mittel)
1 bis 20 Gew. %, vorzugsweise
2 bis 5 Gew. %
des Konzentrats, bestehend aus
2 bis 20 Gew. %, vorzugsweise
8 bis 12 Gew. %
der Mischung aus
A) Methylenbisthiocyanat und
B) Tris-(N-cyclohexyl-diazeniumdioxi)-aluminium
in einem Verhältnis von
8 : 1 bis 1 : 8, vorzugsweise
2 : 1 bis 1 : 2
sowie
mehr als 79 Gew. %, vorzugsweise
mehr als 87 Gew. %
des unpolaren und/oder polaren organisch-chemischen Lösemittels oder Lösemittelgemisches, vorzugsweise des polaren organisch-chemischen Lösemittels oder Lösemittelgemisches oder des Gemisches aus unpolaren und polaren Lösemitteln oder des Gemisches aus Wasser und einem organisch-chemischen Lösemittel oder Lösemittelgemisch, vorzugsweise einem polaren organisch-chemischen Lösemittel oder Lösemittelgemisch und mindestens einem Emulgator und/oder Netzmittel,
und
mehr als 79 Gew. %, vorzugsweise
mehr als 94 Gew. %
Wasser,
enthält.

4. Mittel oder Konzentrat nach einem oder mehreren der Ansprüche 1 bis 3, dadurch gekennzeichnet, daß als unpolare organisch-chemische Lösemittel Aromatenfraktionen von Mineralölen eingesetzt werden.

5. Mittel oder Konzentrat nach einem oder mehreren der Ansprüche 1 bis 3, dadurch gekennzeichnet, daß als polare organisch-chemische Lösemittel Hydroxy-, Ether-, Ester- oder Ketogruppen enthaltende Lösemittel, vorzugsweise Cyclohexanon, N-Methylpyrrolidon oder Dimethylformamid eingesetzt werden.

6. Mittel oder Konzentrat nach einem oder mehreren der Ansprüche 1 bis 3, dadurch gekennzeichnet, daß als Emulgatoren nichtionogene Emulgatoren oder nichtionogene Emulgatorgemische, vorzugsweise eine Seitengruppe enthaltende exthoxylierte Phenole, eingesetzt werden.

7. Verfahren zum Schutz von Schnittholz gegen holzverfärbende Pilze, dadurch gekennzeichnet, daß auf der Holzoberfläche
2 bis 6 g/m², vorzugsweise
3 bis 5 g/m²
des Mittels oder Konzentrats nach einem oder mehreren der Ansprüche 1, 2, 4 bis 6 aufgebracht werden.

## Claims

1. An agent or concentrate for protecting sawn timber against blue stain and mildew attack, characterised in that it consists of a mixture of
A) methylene bisthiocyanate and
B) tris-(N-cyclohexyl-diazeniumdioxi)aluminium
in a ratio of
8 : 1 to 1 : 8, preferably
2 : 1 to 1 : 2,
dissolved in a non-polar and/or polar organic-chemical solvent or solvent mixture, preferably in a polar organic-chemical solvent or solvent mixture or in a mixture of non-polar and polar solvents or in a mixture of water and an organic-chemical solvent or solvent mixture, preferably a polar organic-chemical solvent or solvent mixture, and at least one emulsifier and/or wetting agent.

2. A concentrate for protecting sawn timber against blue stain and mildew attack according to Claim 1, characterised in that it contains
2 to 20% by weight, preferably
8 to 12% by weight,
of the mixture of
A) methylene bisthiocyanate and
B) tris-(N-cyclohexyl-diazeniumdioxi)aluminium
in a ratio of
8 : 1 to 1 : 8, preferably
2 : 1 to 1 : 2,
and also
more than 79% by weight, preferably
more than 87% by weight,
of the non-polar and/or polar organic-chemical solvent or solvent mixture, preferably of the polar organic-chemical solvent or solvent mixture or of the mixture of non-polar and polar solvents or of the mixture of water and an organic-chemical solvent or solvent mixture, preferably a polar organic-chemical solvent or solvent mixture, and at least one emulsifier and/or wetting agent.

3. An agent for protecting sawn timber against blue stain and mildew attack according to Claim 1 or 2, characterised in that the agent (agent ready for use) contains
1 to 20% by weight, preferably
2 to 5% by weight,
of the concentrate, consisting of
2 to 20% by weight, preferably
8 to 12% by weight,
of the mixture of
A) methylene bisthiocyanate and
B) tris-(N-cyclohexyl-diazeniumdioxi)aluminium
in a ratio of
8 : 1 to 1 : 8, preferably
2 : 1 to 1 : 2,
and also
more than 79% by weight, preferably
more than 87% by weight,
of the non-polar and/or polar organic-chemical solvent or solvent mixture, preferably of the polar organic-chemical solvent or solvent mixture or of the mixture of non-polar and polar solvents or of the mixture of water and an organic-chemical solvent or solvent mixture, preferably a polar organic-chemical solvent or solvent mixture, and at least one emulsifier and/or wetting agent, and
more than 79% by weight, preferably
more than 94% by weight,
water.

4. An agent or concentrate according to one or more of Claims 1 to 3, characterised in that aromatic fractions of mineral oils are used as non-polar organic-chemical solvents.

5. An agent or concentrate according to one or more of Claims 1 to 3, characterised in that solvents containing hydroxy, ether, ester or keto groups, preferably cyclohexanone, N-methyl pyrrolidone or dimethyl formamide, are used as polar organic-chemical solvents.

6. An agent or concentrate according to one or more of Claims 1 to 3, characterised in that non-ionogenic emulsifiers or non-ionogenic emulsifier mixtures, preferably ethoxylated phenols containing a pendant group, are used as emulsifiers.

7. A method for protecting sawn timber against wood-discolouring fungi, characterised in that
2 to 6 g/m², preferably
3 to 5 g/m²,
of the agent or concentrate according to one or more of Claims 1, 2, 4 to 6 are applied to the surface of the wood.

## Revendications

1. Produit ou concentré pour protéger le bois de sciage contre l'attaque par des cyanophycées et par des moisissures, caractérisé en ce qu'il consiste en un mélange de :
A) du bisthiocyanate de méthylène, et
B) du tris(N-cyclohexyl-diazéniumdioxy)aluminium,
selon un rapport de :
8 : 1 à 1 : 8, avantageusement
2 : 1 à 1 : 2,
dissous dans un solvant ou un mélange de solvants organiques chimiques non polaires et/ou polaires, avantageusement dans un solvant ou un mélange de solvants organiques chimiques polaires ou dans un mélange de solvants non polaires et de solvants polaires ou dans un mélange d'eau et d'un solvant ou un mélange de solvants organiques chimiques, avantageusement un solvant ou un mélange de solvants organiques chimiques polaires et au moins un émulsifiant et/ou un agent de mouillage.

2. Concentré pour protéger le bois de sciage contre une attaque par des cyanophycées et contre une attaque par de la moisissure selon la revendication 1, concentré caractérisé en ce qu'il contient :
2 à 20 % en poids , avantageusement
8 à 12 % en poids,
du mélange :
A) de bisthiocyanate de méthylène et
B) de tris(N-cyclohexyl-diazéniumdioxy)aluminium,
selon un rapport de :
8 : 1 à 1 : 8, avantageusement
2 : 1 à 1 : 2
ainsi que :
plus de 79 % en poids, avantageusement
plus de 87 % en poids,
du solvant ou du mélange de solvants organiques chimiques non polaires et/ou polaires, avantageusement du solvant ou du mélange de solvants organiques chimiques polaires ou du mélange de solvants non polaires et de solvants polaires ou du mélange d'eau et d'un solvant ou d'un mélange de solvants organiques chimiques, avantageusement un solvant ou un mélange de solvants organiques chimiques polaires et au moins un émulsifiant et/ou un agent de mouillage.

3. Produit pour protéger le bois de sciage contre une attaque par des cyanophycées et contre une attaque par de la moisissure selon la revendication 1 ou 2, caractérisé en ce que le produit (produit prêt à l'application) contient :
1 à 20 % en poids, avantageusement
2 à 5 % en poids
du concentré consistant en :
2 à 20 % en poids, avantageusement
8 à 12 % en poids
du mélange
A) de bisthiocyanate de méthylène et,
B) de tris-(N-cyclohexyl-diazéniumdioxy)aluminium
selon un rapport
de 8 : 1 à 1 : 8, avantageusement
de 2 : 1 à 1 : 2
ainsi que :
plus de 79 % en poids, avantageusement
plus de 87 % en poids,
du solvant ou du mélange de solvants organiques chimiques, non polaires et/ou polaires, avantageusement du solvant ou du mélange de solvants organiques chimiques polaires ou du mélange de solvants non polaires et polaires ou du mélange d'eau et d'un solvant ou d'un mélange de solvants organiques chimiques, avantageusement un solvant ou un mélange de solvants organiques chimiques polaires et au moins un émulsifiant et/ou un agent de mouillage, et
plus de 79 % en poids, avantageusement
plus de 94 % en poids d'eau.

4. Produit ou concentré selon une ou plusieurs des revendications 1 à 3, caractérisé en ce qu'on utilise comme solvants organiques chimiques non polaires des fractions aromatiques pétrolières.

5. Produit ou concentré selon une ou plusieurs des revendications 1 à 3, caractérisé en ce qu'on utilise comme solvants chimiques organiques polaires des solvants contenant des groupes hydroxyle, éther, ester ou cétone, avantageusement la cyclohexanone, la N-méthylpyrrolidone ou le diméthylformamide.

6. Produit ou concentré selon une ou plusieurs des revendications 1 à 3, caractérisé en ce qu'on utilise comme émulsifiant des émulsifiants non ionogènes ou des mélanges d'émulsifiants non ionogènes, avantageusement des phénols éthoxylés contenant un groupe latéral.

7. Procédé pour protéger du bois de sciage contre des champignons altérant la couleur du bois, caractérisé en ce qu'on applique à la surface du bois
2 à 6 g/m², avantageusement
3 à 5 g/m² du produit ou concentré selon une ou plusieurs des revendications 1, 2, 4 à 6.
